# EUROPEAN PATENT SPECIFICATION

(11) **EP 0 346 302 B1**
(45) Date of publication and mention of the grant of the patent: **17.08.1994**
(21) Application number: 89830251.8
(22) Date of filing: 06.06.1989
(51) Int. Cl.: A61M 1/18, A61M 1/36, B01D 63/00, F28F 21/06

(54) **A device for the treatment of blood**
Vorrichtung zur Behandlung von Blut
Appareil pour le traitement du sang

(30) Priority: 07.06.1988 IT 2088188
(43) Date of publication of application: 13.12.1989
(73) Proprietor: SORIN BIOMEDICA CARDIO S.p.A., I-10125 Torino (IT)
(72) Inventor: Fini, Massimo, I-41037 Mirandola (Modena) (IT)
(74) Representative: Bosotti, Luciano

(56) References cited:
- EP-A- 0 093 677
- FR-A- 2 380 362
- US-A- 4 031 012
- US-A- 4 622 206

## Description

The invention relates to a device for the treatment of blood.

It is known that extracorporal circuits through which blood flows during surgical operations have an oxygenator device which has the function of giving up oxygen to the blood and at the same time removing carbon dioxide, and a heat exchanger in which the temperature of the blood is regulated by the exchange of heat with a fluid, normally water.

Both the oxygenators and the heat exchangers of the prior art are produced in many forms, but none is without disadvantageous characteristics which the device according to the invention aims to eliminate.

Specifically, the present invention relates to a device for the treatment of blood having the characteristics set forth in the preamble of Claim 1, which is known, e.g. from US-A-4 622 206.

In particular, the object of the present invention is to provide a device for the treatment of blood of the kind specified above which, by the suitable selection of the hollow fibres which it contains, can act as an oxygenator or a heat exchanger through which the blood flows with a minimum loss of pressure, so as to enable circulation by gravity alone and optimal operating conditions, such as, for example, negligible haemolytic damage.

The object proposed is achieved by a blood-treatment device having the further features set forth in Claim 1.

Further characteristics and advantages will become clearer from the description of two preferred but not exclusive embodiments of the invention illustrated by way of non-limiting example in the appended drawings, in which:
Figure 1 is a transparent, cut-away perspective view of the invention according to a first embodiment;
Figure 2 shows a detail of Figure 1 on a reduced scale;
Figure 3 shows a first variant of the invention.

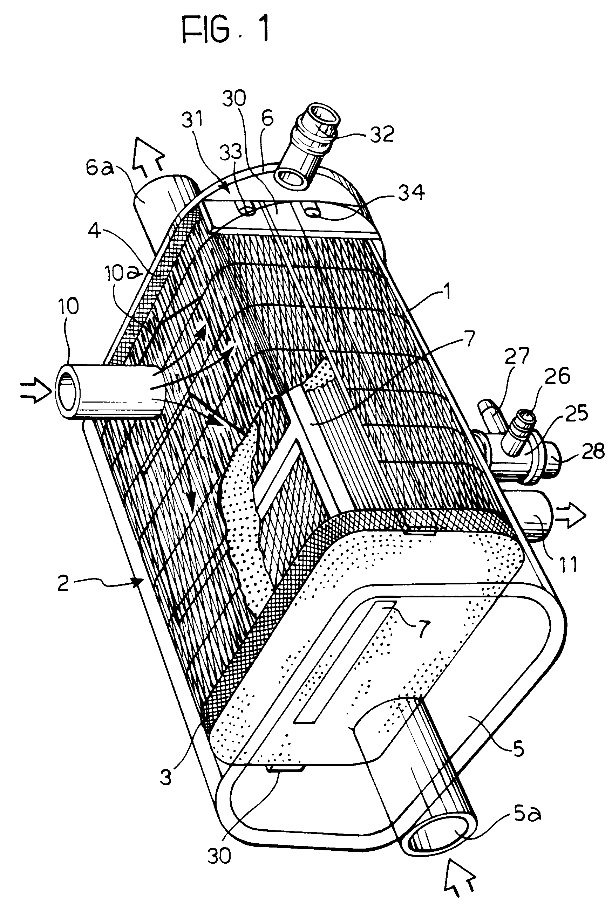

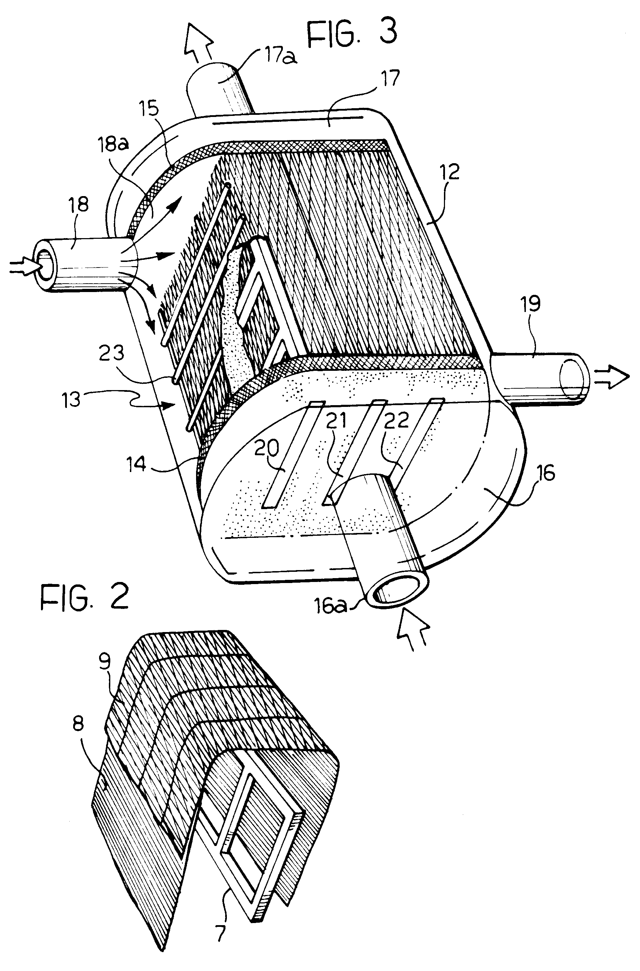

With reference to Figures 1 and 2, a casing, indicated 1, houses a plurality of superposed layers of hollow fibres, generally indicated 2, the ends of the hollow fibres being incorporated in two walls 3 and 4 of resin or potting and opening into two opposed spaces 5 and 6 which have respective connections 5a and 6a for the inlet and outlet of the fluid which, as will be described in more detail below, is intended to be conveyed by the hollow fibres. The fibres in the various layers are arranged in offset directions, that is, the alternate layers are inclined at different angles to the longitudinal axis of the device on which the connections 5a and 6a and arranged, and this arrangement is achieved very simply, in known manner, by wrapping a pair of bands, indicated 8 and 9 in Figure 2, several times around a frame 7 in contact with each other, the fibres being combined in the bands so as to be arranged in directions which are slightly offset from one band to another.

The described arrangement of the hollow fibres in the various layers, which are formed so that their attitudes correspond to that of the frame 7, provides good uniformity of resistance to the passage of the blood which enters through the connector 10, spreads throughout the chamber 10a adjacent the upper end layer of hollow fibres of the plurality 2, as shown by the arrows in Figure 1, and passes through the plurality of layers in a direction substantially perpendicular thereto, so as to bathe the fibres externally without encountering any appreciable resistance due to the presence of the frame 7 which allows the maximum flow, the blood emerging into an outlet chamber adjacent the lower end layer which has an outlet connection 11. The uniform distribution of the blood flow, which in the device described bathes the hollow fibres without any occluded regions or preferred passages, enables pressure losses to be reduced to a minimum so that, in operation, the flow of blood can be achieved by gravity alone, with all the resulting advantages.

The hollow fibres in the plurality of layers 2 can convey oxygen, or a mixture of oxygen and nitrogen, and are made from a known type of a microporous, hydrophobic plastics material through which the oxygen flows towards the blood and the carbon dioxide flows from the blood in the opposite direction, by diffusion due to the differences in concentration, and, although the device oxygenates the blood in this case, the hollow fibres could just as well be made from an impermeable plastics material so as to convey water for exchanging heat with the blood in order to regulate its temperature, the device according to the invention thus being in the form of a heat exchanger.

In fact, it is particularly advantageous for oxygenators and heat exchangers formed by devices according to the invention to be coupled in series in an extracorporal circuit.

In the embodiment shown in Figure 1, there is quite a large number of hollow fibres which, since they are in the parts of the bands 8 and 9 which are turned down around the frame 7, are not in the plurality of layers whose attitudes correspond to that of the frame. If this edge effect is to be reduced so that it is negligible, the embodiment shown in Figure 3 must be adopted.

According to this embodiment, a casing 12 is again provided for housing a plurality of superposed layers, generally indicated 13, of hollow fibres whose ends are incorporated in potting 14, 15 and open into spaces 16 and 17 with respective connectors 16a, 17a for the inlet and outlet of the fluid which is to be conveyed by the hollow fibres, and it is again envisaged that the blood will enter through the connector 18, spread throughout the chamber 18a adjacent the upper end layer of hollow fibres, then pass through the various layers in a direction substantially perpendicular thereto, and emerge in an underlying outlet chamber provided with an outlet connector 19.

Unlike the first embodiment described, however, the layers of hollow fibres are combined in three adjacent blocks produced by the winding of pairs of bands, like 8 and 9, around respective frames 20, 21 and 22, all of which have the same conformation so as to ensure that the maximum flow of blood takes place in the directions of the arrows shown in the drawing.

In this embodiment, which also includes a structure made of thin elements 23 for keeping the layers of hollow fibres compact, the number of fibres which are not in flat layers parallel to the frames is obviously less than in the embodiment shown in Figure 1.

The invention described may be modified and varied in many ways which all fall within the scope of the inventive concept: thus, for example, the various layers of hollow fibres could be formed without frames or there may be any desired number of frames if they are present.

In Figure 1 (the same solution may also be used in the variant of Figure 3) a further duct, generally indicated 25, extends from the wall of the casing 1 near the outlet connector 11 and is intended, when the device is in its normal position of use with the portions 5 and 6 superposed, to be situated at the lower end of the device.

Two connectors 26 and 27 branch from the duct 25 and can be made operative alternatively or can both be shut off by the rotation of a control tap 28.

The connector 26 has the function of enabling a certain arterialized blood-flow (that is, after the oxygen exchange) to be tapped off at any stage of the operation, even when it is not expressly anticipated.

It is thus possible, for example, to carry out so-called "coronary blood perfusion" by means of a tube connected to the connector 26 by a quick and secure coupling.

The connector 27 has a double function:
- to enable an influx of filling liquid (blood, physiological solutions, etc...) from an overlying container (not illustrated) at the start of the stage of use of the device (priming) to prevent the formation and persistence of bubbles or air therein, and
- in any case, to enable the blood to be recirculated through the device if necessary.

Two strips or similar elongate formations, indicated 30 (possibly constituted by ribs projecting from the walls of the device) are arranged along the sides of the pack of fibres 2 and have the function of theoretically dividing the space in which the blood flows outside the pack of fibres 2 into a portion facing the connector 10 for the inlet of the blood to be oxygenated, and a portion facing the connector 11 for the outlet of the oxygenated blood.

In the top part of the device there is a chamber 31 which communicates with the outside of the device through a connector 32 and is separated from the internal cavity in which the fibres 2 are situated by two non-return valves 33 and 34 situated on opposite sides of the strip 30 so as to face the blood-inlet portion and the blood-outlet portion, respectively.

The two valves act in concert to enable air and any bubbles to be vented from the device through the connector 32 during filling and during the operation of the device. The passage of non-oxygenated blood from the inlet portion to the outlet portion is thus prevented, whilst the two portions are discharged simultaneously.

## Claims

1. A device for the treatment of blood, including a casing (1) having a longitudinal axis as well as hollow fibres (2, 13) housed in said casing (1) for conveying a fluid, wherein said fibres are in a plurality of superposed layers arranged in directions which are offset from layer to layer so as to create a uniform flow of blood from an inlet chamber (10; 18) adjacent one end layer of the plurality of superposed layers to an outlet chamber (11, 19) adjacent the other end layer, the blood passing through the layers in a direction substantially perpendicular thereto and bathing the external surfaces of the hollow fibres (2, 13), characterised in that the alternate layers of hollow fibres (2) are inclined at different angles to the longitudinal axis of the casing (1) by wrapping a pair of bands (8, 9) several times around a frame (7), the fibres (2) being combined in the bands so as to be arranged in directions which are offset from one band to the other.

2. A device according to Claim 1, characterised in that the hollow fibres (2, 13) suitable for conveying a fluid are incorporated at their ends in masses (3, 4; 14, 15) of potting contained in said casing (1) which defines two opposing spaces (5, 6; 16, 17) into which the fibres open and which are provided with connections (5a, 6a; 16a, 17a) to the outside, two chambers being defined adjacent the respective end layers of the plurality of superposed layers of hollow fibres and having respective connectors (10, 18; 11, 19) for the inlet and outlet of the blood.

3. A device according to any one of the preceding claims, for acting as a blood oxygenator, characterised in that the hollow fibres (2, 13) convey oxygen and are made from a microporous hydrophobic plastics material for enabling the flow of oxygen and carbon dioxide by diffusion due to differences in concentration.

4. A device according to Claim 1 and Claim 2, for acting as a heat exchanger, characterised in that the hollow fibres (2, 13) are made from an impermeable plastics material and convey a fluid, normally water, for exchanging heat with the blood to regulate its temperature.

5. A device according to any one of the preceding claims, characterised by the presence of a structure (23) adjacent the respective end layers of the plurality of superposed layers of hollow fibres for keeping the fibres closely packed, the structure being made of thin elements so as to afford the minimum resistance to the passage of the blood.

6. A device according to any one of the preceding claims, characterised in that said pair of bands (8, 9) are adapted to be wrapped in contact with each other around said flat frame (7) shaped so as to allow the maximum amount of blood to flow through the layers of fibres, the fibers in the two bands (8, 9) being combined in directions which are offset relative to each other.

7. A device according to any one of claims 1 to 6, characterised in that the hollow fibres (13) are combined in a pair of bands (8, 9) which are adapted to be wrapped in contact with each other around a plurality of flat frames (20, 21, 22) shaped so as to allow the maximum amount of blood to flow through the blocks of layers of fibres with a negligible edge effect, the fibres in the two bands (8, 9) being combined in directions which are offset relative to each other.

8. A device according to Claim 2, characterised in that at least two further passageways (25, 26; 25, 27) for liquid are provided near the blood outlet connector (11) and can be opened (28) selectively and alternatively.

9. A device according to any one of the preceding claims, characterised in that valve means (33, 34) are provided for venting the device and, in use, are intended to be situated in the upper part of the device.

10. A device according to Claim 9, characterised in that:
- partition means (30) are provided for dividing the space in which the blood flows into two portions, an inlet portion (10) and an outlet portion (11) respectively, and
- the valve means comprise separate valve elements (33, 34) which communicate with the inlet portion (10) and the outlet portion respectively.

## Patentansprüche

1. Vorrichtung für die Behandlung von Blut, wobei die Vorrichtung ein Gehäuse (1) aufweist, das eine Längsachse sowie Hohlfasern (2, 13) besitzt, die im Gehäuse (1) untergebracht sind, um ein Fluid zu führen, wobei die Fasern in einer Vielzahl von übereinanderliegenden Schichten in Richtungen angeordnet sind, die von Schicht zu Schicht versetzt sind, um eine gleichförmige Blutströmung von einer Einlaßkammer (10; 18) neben einer Endschicht der Vielzahl von übereinanderliegenden Schichten zu einer Auslaßkammer (11, 19) neben der anderen Endschicht zu erzeugen, wobei das Blut die Schichten im wesentlichen senkrecht dazu durchläuft und die Außenflächen der Hohlfasern (2, 13) benetzt, dadurch gekennzeichnet, daß die abwechselnden Schichten von Hohlfasern (2) dadurch unter verschiedenen Winkeln zur Längsachse des Gehäuses (1) geneigt sind, daß ein Paar von Bändern (8, 9) mehrmals um einen Rahmen (7) geschlungen wird, wobei die Fasern (2) in den Bändern so vereinigt sind, daß sie in Richtungen angeordnet werden, die von einem Band zum anderen versetzt sind.

2. Vorrichtung gemäß Anspruch 1, dadurch gekennzeichnet, daß die Hohlfasern (2, 13), die ein Fluid führen können, an ihren Enden in Massen (3, 4; 14, 15) aus Keramik aufgenommen werden, die im Gehäuse (1) enthalten sind, das zwei gegenüberliegende Zwischenräume (5, 6; 16, 17) bildet, in die sich die Fasern öffnen, und die mit Anschlußstücken (5a, 6a; 16a, 17a) zur Außenseite versehen sind, wobei zwei Kammern neben den entsprechenden Endschichten der Vielzahl der übereinanderliegenden Schichten von Hohlfasern gebildet werden und entsprechende Anschlußstücke (10, 18; 11, 19) für den Einlaß und den Auslaß des Blutes besitzen.

3. Vorrichtung gemäß irgendeinem der bisherigen Ansprüche, die als Einrichtung arbeitet, um das Blut mit Sauerstoff anzureichern, dadurch gekennzeichnet, daß die Hohlfasern (2, 13) Sauerstoff führen und aus einem mikroporösen, hydrophoben Kunststoff bestehen, um die Strömung von Sauerstoff und Kohlendioxid durch jene Diffusion zu ermöglichen, die infolge der Konzentrationsunterschiede entsteht.

4. Vorrichtung gemäß Anspruch 1 und 2, die als Wärmetauscher arbeitet, dadurch gekennzeichnet, daß die Hohlfasern (2, 13) aus einem undurchlässigen Kunststoff bestehen und ein Fluid, normalerweise Wasser, führen, um Wärme mit dem Blut auszutauschen, um dessen Temperatur zu regeln.

5. Vorrichtung gemäß irgendeinem der bisherigen Ansprüche, dadurch gekennzeichnet, daß ein Aufbau (23) neben den entsprechenden Endschichten der Vielzahl von übereinanderliegenden Schichten von Hohlfasern vorhanden ist, um die Fasern eng gepackt zu halten, wobei der Aufbau aus dünnen Elementen besteht, um dem Blutdurchlaß einen minimalen Widerstand zu bieten.

6. Vorrichtung gemäß irgendeinem der bisherigen Ansprüche, dadurch gekennzeichnet, daß das Paar von Bändern (8, 9) in Berührung miteinander um den flachen Rahmen (7) geschlungen wird, der so geformt ist, um eine maximale Blutmenge durch die Schichten von Fasern fließen zu lassen, wobei die Fasern in den beiden Bändern (8, 9) in Richtungen vereinigt sind, die relativ zueinander versetzt sind.

7. Vorrichtung gemäß irgendeinem der Ansprüche 1 bis 6, dadurch gekennzeichnet, daß die Hohlfasern (13) in einem Paar von Bändern (8, 9) vereinigt sind, die dazu dienen, um in Berührung miteinander um eine Vielzahl von flachen Rahmen (20, 21, 22) geschlungen zu werden, die so ausgebildet sind, daß durch die Blöcke von Schichten aus Fasern eine maximale Blutmenge mit einer vernachlässigbaren Kantenwirkung fließen kann, wobei die Fasern in den beiden Bändern (8, 9) in Richtungen vereinigt sind, die relativ zueinander versetzt sind.

8. Vorrichtung gemäß Anspruch 2, dadurch gekennzeichnet, daß zumindest zwei weitere Kanäle (25, 26; 25, 27) für die Flüssigkeit nahe dem Blutauslaß-Anschlußstück (11) vorgesehen sind und wahlweise und abwechselnd geöffnet (28) werden können.

9. Vorrichtung gemäß irgendeinem der bisherigen Ansprüche, dadurch gekennzeichnet, daß eine Ventileinrichtung (33, 34) vorgesehen ist, um die Vorrichtung zu entlüften, wobei sie so vorgesehen ist, daß sie im Betrieb im oberen Teil der Vorrichtung liegt.

10. Vorrichtung gemäß Anspruch 9, dadurch gekennzeichnet, daß
- eine Trenneinrichtung (30) vorgesehen ist, um den Zwischenraum, in dem das Blut strömt, in zwei Bereiche zu teilen, einen Einlaßbereich (10) bzw. einen Auslaßbereich (11), und
- die Ventileinrichtung getrennte Ventilelemente (33, 34) enthält, die mit dem Einlaßbereich (10) bzw. dem Auslaßbereich in Verbindung stehen.

## Revendications

1. Dispositif de traitement du sang, comprenant un boîtier (1) possédant un axe longitudinal, ainsi que des fibres creuses (2, 13) logées dans ce boîtier (1) pour acheminer un fluide, dans lequel les fibres sont situées dans une pluralité de couches superposées disposées dans des directions décalées d'une couche à l'autre afin de créer un écoulement uniforme de sang d'une chambre d'admission (10 ; 18), adjacente à une couche terminale de la pluralité de couches superposées, vers une chambre d'évacuation (11, 19), adjacente à l'autre couche terminale, le sang traversant les couches selon une direction sensiblement perpendiculaire à celles-ci et baignant les surfaces externes des fibres creuses (2, 13), caractérisé en ce que les couches alternatives de fibres creuses (2) présentent une inclinaison selon différents angles, par rapport à l'axe longitudinal du boîtier (1), du fait de l'enveloppement, à plusieurs reprises, d'une paire de bandes (8, 9) autour d'un cadre (7), les fibres (2) étant combinées, dans les bandes, de telle sorte qu'elles soient disposées dans des directions décalées d'une bande à l'autre.

2. Dispositif selon la revendication 1, caractérisé en ce que les fibres creuses (2, 13) adaptées à acheminer un fluide sont incorporées, à leurs extrémités, dans des masses (3, 4 ; 14, 15) de matériau d'enrobage contenu dans le boîtier (1), qui définit deux espaces opposés (5, 6 ; 16, 17) dans lesquels les fibres débouchent et qui sont pourvus de connexions (5a, 6a ; 16a, 17a) vers l'extérieur, deux chambres étant définies de façon adjacente aux couches terminales respectives de la pluralité de couches superposées de fibres creuses et possédant des connecteurs respectifs (10, 18 ; 11, 19) destinés à l'entrée et à la sortie du sang.

3. Dispositif selon l'une quelconque des revendications précédentes, destiné à servir de dispositif d'oxygénation du sang, caractérisé en ce que les fibres creuses (2, 13) acheminent de l'oxygène et sont constituées en une matière plastique hydrophobe microporeuse pour permettre l'écoulement d'oxygène et de gaz carbonique par diffusion, du fait des différences de concentration.

4. Dispositif selon la revendication 1 et la revendication 2, destiné à servir d'échangeur de chaleur, caractérisé en ce que les fibres creuses (2, 13) sont constituées en une matière plastique imperméable et acheminent un fluide, normalement de l'eau, afin de réaliser un échange de chaleur avec le sang afin de réguler sa température.

5. Dispositif selon l'une quelconque des revendications précédentes, caractérisé par la présence d'une structure (23) adjacente aux couches terminales respectives de la pluralité de couches superposées de fibres creuses, afin de maintenir les fibres serrées, la structure étant constituée d'éléments fins afin d'offrir la résistance minimum au passage du sang.

6. Dispositif selon l'une quelconque des revendications précédentes, caractérisé en ce que la paire de bandes (8, 9) est susceptible d'être enveloppée, en contact l'une avec l'autre, autour du cadre plat (7) dont la forme permet à la quantité maximum de sang de s'écouler à travers les couches de fibres, les fibres, dans les deux bandes (8, 9) étant combinées dans des directions qui sont décalées les unes par rapport aux autres.

7. Dispositif selon l'une quelconque des revendications 1 à 6, caractérisé en ce que les fibres creuses (13) sont combinées en une paire de bandes (8, 9) qui sont susceptibles d'être enveloppées, en contact l'une avec l'autre, autour d'une pluralité de cadres plats (20, 21, 22) dont la forme permet à la quantité maximum de sang de s'écouler à travers les blocs de couches de fibres, avec un effet d'arête négligeable, les fibres, dans les deux bandes (8, 9) étant combinées dans des directions qui sont décalées les unes par rapport aux autres.

8. Dispositif selon la revendication 2, caractérisé en ce qu'au moins deux autres passages (25, 26; 25, 27), pour du liquide, sont prévus à proximité du connecteur d'évacuation du sang (11) et peuvent être ouverts (28) de façon sélective et alternative.

9. Dispositif selon l'une quelconque des revendications précédentes, caractérisé en ce que des clapets (33, 34) sont prévus pour purger le dispositif et, en cours d'utilisation, sont destinés à se situer dans la partie supérieure du dispositif.

10. Dispositif selon la revendication 9, caractérisé en ce que :
- des moyens de séparation (30) sont prévus pour diviser en deux parties l'espace dans lequel le sang s'écoule, une partie d'admission (10) et une partie d'évacuation (11), respectivement, et
- les clapets comprennent des éléments formant clapets séparés (33, 34) qui communiquent avec la partie d'admission (10) et la partie d'évacuation, respectivement.
